# EUROPEAN PATENT APPLICATION

(11) **EP 4 834 805 A1**
(43) Date of publication of application: **04.11.2026**
(21) Application number: 26163861.3
(22) Date of filing: 11.03.2026
(51) Int. Cl.: B65G 21/08, B65G 41/00

(54) **TAIL END FINGER PROTECTION FOR BELT CONVEYOR OF MINERAL MATERIAL**

(30) Priority: 02.05.2025 FI 20253172
(71) Applicant: Metso Finland Oy, 02230 Espoo (FI)
(72) Inventor: JUUTINEN, Tuomas, 02230 Espoo (FI); RAJALA, Jouni, 02230 Espoo (FI)
(74) Representative: Espatent Oy

(57) **Abstract**

A tail end finger protection (100) for a belt conveyor of mineral material, mineral material processing device (730, 740), a mineral material processing plant (700) having same, and a method including covering (901) an edge of the conveyor (720, 750) belt from below at a tail end (310) by a fixed bottom protection grid (110) for providing finger protection while allowing mineral material released by the conveyor to fall through a plurality of first openings of the fixed bottom protection grid (110); and moving (902) a blocking grid (120) between a protective state in which the blocking grid (120) is adjacent to the fixed bottom protection grid (120) and constricts the first openings, and a maintenance state in which the blocking grid (120) no longer constricts the fixed bottom protection grid (110) so reducing hindrance of clearing the fixed bottom protection grid.

## Description

### TECHNICAL FIELD

The present disclosure generally relates to tail end finger protection for a belt conveyor of mineral material.

### BACKGROUND

This section illustrates useful background information without admission of any technique described herein representative of the state of the art.

New improvement opportunities are identified in current belt conveyor tail end (e.g., tail drum or sprocket) protections have some particular problems. At a tail end, a nip is formed on either side of the conveyor belt on upstream side of the end where the conveyor belt arrives at the end. Such nips can be protected by arranging a protective cover around the end, especially around regions of the nips. However, the belt tends to accrue mineral material also onto such protective covers. Therefore, the protective covers can be made of a grid so as to avoid the need to clear such covers. However, mineral material, especially crushed or screen mineral material, has a high tendency of accruing and blocking openings of the covers. Hence, the grids tend to get blocked even with rather large windows and relatively shallow bridges between adjacent windows.

Notably, at a return end, the nip is formed underneath the end, whereas on at a discharge end, the nip is on the top side where there is no gravitational accrual of the mineral material to the protective cover. Hence, the present document is particularly useful for the finger protection at the return or tail ends.

It may be difficult to both protect the nip of tail end and conveyor belt on completely, while not significantly hindering clearing of the tail end of accrued material, particularly mineral material, and/or incurring significant delay in such clearing. In some cases, the tail end finger protection may need to be removed because uncleared material on a protection mesh could otherwise reach and damage the tail end and/or the conveyor belt.

At present, the tail end could be protected in any of different main approaches. For example, the tail end could be protected completely with fixed meshes that have fixed protection cover on sides, rear and top. The bottom could be protected by a mesh which is installed by screws. Then, all the screws need to be removed for removing the mesh for cleaning. The removing of the mesh may be difficult and risky, if there is a lot of material on the mesh. Moreover, sufficiently robust meshes are heavy and often difficult to re-install after removal, as the mesh should be somehow held in place with screw apertures properly aligned.

As another example, the tail end could be protected completely with a foldable mesh type protection that has a fixed protection cover on sides, rear and top. The bottom could be protected by a big mesh. The mesh may be cleaned by loosening fixing bolts on and pulling the mesh away from open slots. Then the mesh could be turned on vertical position for cleaning. However, safely turning the mesh may be difficult especially if there is a lot of material on the mesh. Moreover, when the mesh is turned open, the tail end nip becomes unprotected.

As another example, the tail end could be protected on sides only, without a lower mesh type of protection, so only protecting sides of the nip. There may yet remain an access to the nip of tail end and conveyor belt on return side because in the absence of protection against accessing the nip obliquely from below.

It is desirable to address the problems related to the prior art and/or to provide a new technical alternative.

### SUMMARY

The appended claims define the scope of protection. Any examples and technical descriptions of apparatuses, products and/or methods in the description and/or drawings not covered by the claims are presented not as embodiments of the invention but as background art or examples useful for understanding the invention.

According to a first example aspect there is provided a tail end finger protection for a belt conveyor of mineral material, comprising:
a fixed bottom protection grid configured to provide a finger protection at an edge of the belt conveyor from below at a tail end while allowing mineral material released by the conveyor to fall through a plurality of first openings of the fixed bottom protection grid; and
a blocking grid movable between a protective state in which the blocking grid is adjacent to the fixed bottom protection grid and constricts the first openings, and a maintenance state in which the blocking grid no longer constricts the first openings of the fixed bottom protection grid so reducing hindrance of clearing the fixed bottom protection grid.

In an example embodiment, the blocking grid is a slidable blocking grid. In an example embodiment, the blocking grid is slidable in a longitudinal direction of the belt conveyor.

In an example embodiment, the fixed bottom grid has a first grid opening size. In an example embodiment, the blocking grid has a second grid opening size. In an example embodiment, the first grid opening size is greater than the second grid opening size.

The blocking grid may be configured to block accessing a tail end nip of the belt conveyor from below by the blocking grid when in the protective state.

The blocking grid may be configured to allow having a maintenance access to the fixed bottom protection grid from below in the maintenance state of the blocking grid for clearing of accrued mineral material.

The blocking grid may comprise a plurality of second grid openings. The blocking grid may have a second grid opening size. The fixed bottom protection grid may comprise a plurality of first grid openings. The fixed bottom grid may have a first grid opening size. The first grid opening size may be greater than the second grid opening size.

The second grid opening size may be small enough to block inserting a hand up to a wrist depth through the blocking grid.

The first grid opening size may be large enough for clearing mineral material at least with fingers through the first grid openings. The first grid opening size may be suitable to block access by hands the tail end nip of the belt conveyor from below. The first grid opening may be at most 50 %; 100 %; or 200 % greater than the second grid opening. The second grid opening may be at most 20 mm; 30 mm; 50 mm; or 65 mm. The first grid opening may be at most 50 mm; or 75 mm.

In case of rectangular openings, the grid opening may be defined along a longer side of the grid opening. Alternatively, the grid openings may be defined as a maximum diameter of a ball that can pass through without making a contact with any surface that defines the grid openings.

The blocking grid may be releasable for sliding by detaching a locking element. The locking element may be releasable by a tool only. The locking element may be a bolt. The blocking grid may be configured to remain coupled with the fixed bottom protection grid even when the locking element is released. Advantageously, losing the blocking grid may be structurally hindered by maintaining the blocking grid coupled with the fixed bottom protection grid.

The blocking grid may be configured to be movable away from the top of the fixed bottom protection grid to a sufficient extent for clearing the fixed bottom protection grid. The blocking grid may be configured to be movable away from the top of the fixed bottom protection grid by sliding to an extent that is at least 65 %; 80 %; or 90 % of a length of the slidable blocking grid, preferably in sliding direction. The blocking grid may be pivotable away from the fixed bottom protection grid.

The finger protection may be configured to prevent getting fingers closer than 10 cm; 20 cm; or 50 cm to the tail end nip even if the blocking grid is removed and only the fixed bottom protection grid remains in place.

The fixed bottom protection grid may have a thickness of at least 3 mm; 4 mm; or 5 mm. Advantageously, such thicknesses may provide sufficient strength without excessive weight and material consumption.

The blocking grid may have a thickness of at least 2 mm; 3 mm; or 4 mm. Advantageously, such thicknesses may provide sufficient strength without excessive weight and material consumption, when also supported by the fixed bottom protection grid.

The blocking grid may define second grid openings by first ridges that are at most 2 mm; 3 mm; or 4 mm wide. Advantageously, such first ridges may be narrow enough to allow most of the mineral material fall through the second grid openings instead of accruing onto the first ridges. The first ridges may comprise first sloping upper surfaces so as to mitigate accrual of mineral material thereon.

The fixed bottom protection grid may define the first grid openings by second ridges that are at most 2 mm; 3 mm; or 4 mm wide. Advantageously, such second ridges may be narrow enough to allow most of the mineral material fall through the first grid openings instead of accruing onto the second ridges.

The first ridges may comprise sloping upper surfaces so as to mitigate accrual of mineral material.

The blocking grid and the fixed bottom protection grid may be configured to match each other so when the blocking grid is in place, the second ridges may be covered by the first ridges. Preferably the first ridges do not span over the first grid openings for mitigating blocking of the finger protection, when the blocking grid is aligned with the fixed bottom protection grid.

The finger protection may be configured to align the blocking grid with the fixed bottom protection grid when the blocking grid is moved in place. The finger protection may comprise one or more alignment guides.

In another example embodiment, the first grid opening size is equal to the second grid opening size. In an example embodiment, the protective state of the blocking grid is such that the blocking grid is aligned with opening defining ridges crossing the first grid openings of the fixed bottom protection grid.

The finger protection may comprise an external side wall configured to block accessing of the tail end nip from an external side of the belt conveyor. The external side wall may comprise a steel plate.

The finger protection may comprise an inner side wall configured to block accessing of the tail end nip from between external edges of the belt conveyor. The inner side wall may comprise a rubber plate. The rubber plate may be adjustable to align the inner side wall adjacent to the belt of the conveyor.

The fixed bottom protection grid may form at least a part of the sliding support.

The belt may be made of flexible material. The belt may consist of a single piece of flexible material. The belt may be made of rubber or polymer material. The tail end may comprise a conveyor drum.

The belt may be an apron belt. The apron belt may comprise one or more chains and a plurality of lamellas driven by the one or more chains. The apron belt may comprise one chain on each side and lamellas extending between the chains. The tail end may comprise or be a sprocket.

Alternatively to the first example aspect implementation, the maintenance state may be such that the blocking grid constricts the fixed bottom grid by at most 50 percent or 75 per cent of the extent in which the blocking grid constricts the fixed bottom grid in the protective state.

According to a second example aspect there is provided a mineral material processing device comprising:
a belt conveyor comprising a tail end;
the tail end finger protection of the first example aspect.

The mineral material processing device may comprise a screen.

The mineral material processing device may comprise a crusher.

According to a third example aspect there is provided a mineral material processing plant comprising the mineral material processing device of the second example aspect. The mineral material processing plant may further comprise a platform frame that is configured to carry the mineral material processing device.

The mineral material processing plant may be a mobile mineral material processing plant. The mineral material processing plant may be self-propelling. The mineral material processing plant may comprise one or more wheels. processing plant may comprise one or more crawler tracks.

Advantageously, the tail end finger protection may be well-suited for mobile plants, because of light-weight structure that facilitates transportation of the plant. Advantageously, the tail end finger protection may be well-suited for mobile plants because of easy maintenance at remote sites. Advantageously, the tail end finger protection may be well-suited for mobile plants because of particular suitability for maintenance in the presence of snow and ice, thanks to a robust and easily operable structure that is simple to melt by hot air or water if frozen, while avoiding chances that heavy parts could be solely suspended by ice.

According to a fourth example aspect there is provided a method for tail end finger protection of a belt conveyor of mineral material, comprising:
covering an edge of the conveyor belt from below at a tail end by a fixed bottom protection grid for providing finger protection while allowing mineral material released by the conveyor to fall through a plurality of first openings of the fixed bottom protection grid; and
moving a blocking grid between a protective state in which the blocking grid is adjacent to the fixed bottom protection grid and constricts the first openings into smaller sub-openings through which the mineral material may fall through, and a maintenance state in which the blocking grid no longer constricts the fixed bottom protection grid so reducing hindrance of clearing the fixed bottom protection grid.

In the protective state, the blocking grid may constrict the first openings by splitting the first openings.

The method may further comprise blocking accessing a tail end nip of the belt conveyor from below by the blocking grid when in the protective state.

The method may further comprise allowing having a maintenance access to the fixed bottom protection grid from below in the maintenance state of the blocking grid for clearing of accrued mineral material.

According to a fifth example aspect there is provided an apparatus comprising means for performing the method of the fourth example aspect.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:
Fig. 1 illustrates a tail end finger protection of an example embodiment for a belt conveyor of mineral material, in an operating configuration;
Fig. 2 illustrates the tail end finger protection of Fig. 1 in a maintenance configuration;
Figs. 3 to 6 show other views of the tail end finger protection of Figs. 1 and 2, with some further details;
Fig. 7 shows a mineral material processing plant of an example embodiment;
Figs. 8a to 8d illustrate some further example embodiments on details of the tail end finger protection; and
Fig. 9 shows a flow chart of a method of an example embodiment.

### DETAILED DESCRIPTION

In the following description, like reference signs denote like elements or steps.

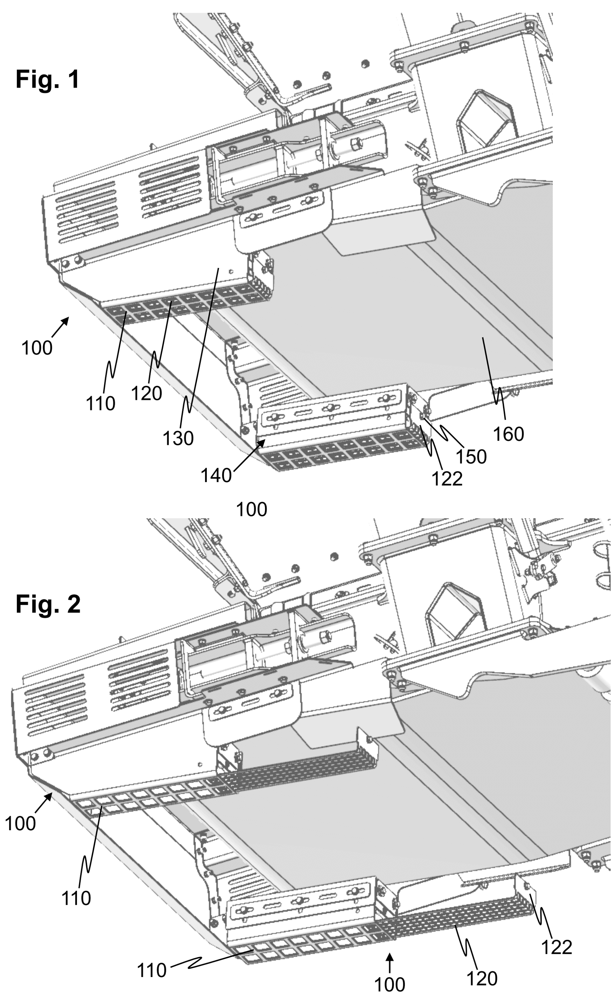

Fig. 1 illustrates a tail end finger protection 100 of an example embodiment for a belt conveyor of mineral material, in an operating configuration, whereas Fig. 2 illustrates the same in a maintenance configuration. Looking at these drawings in parallel may facilitate appreciating some details.

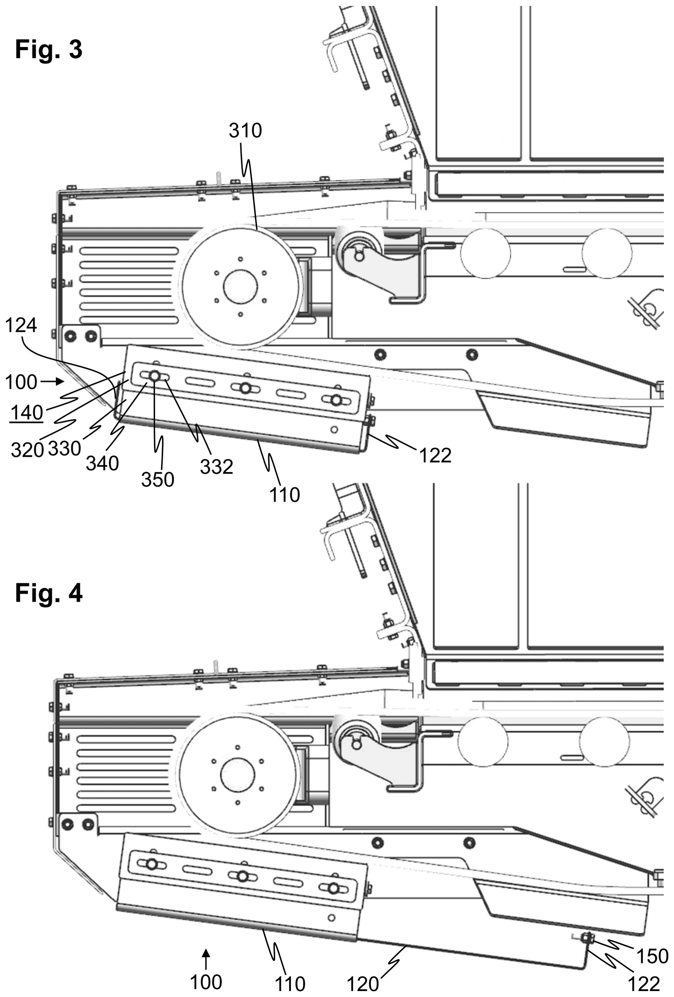

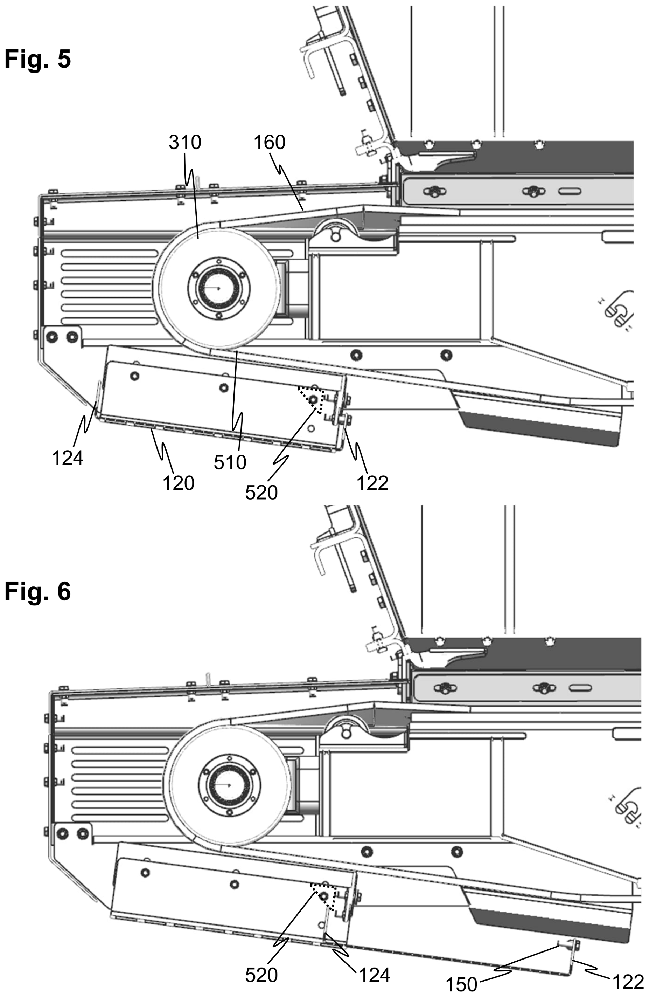

In an example embodiment, the tail end finger protection 100 comprises a fixed bottom protection grid 110. In an example embodiment, the fixed bottom protection grid 110 has a first grid opening size for covering an edge of a conveyor belt 160 from below at a tail end 310 (the tail end appears in Figs. 3 and 5).

In an example embodiment, a blocking grid 120 is movable between a protective state (in Fig. 1) and a maintenance state (in Fig. 2).

In an example embodiment, the blocking grid is in the protective state is adjacent to the fixed bottom protection grid and constricts the first openings into smaller sub-openings through which the mineral material is allowed to fall through. In an example embodiment, the blocking grid 120 rests on top of the fixed bottom protection grid 110 in the protective state. In an example embodiment, the fixed bottom protection grid 110 forms at least a part of a support for the blocking grid.

In an example embodiment, the blocking grid 120 is moved in the maintenance state away or separated from the fixed bottom protection grid 110, e.g., by sliding or pivoting, e.g., over one or more hinges.

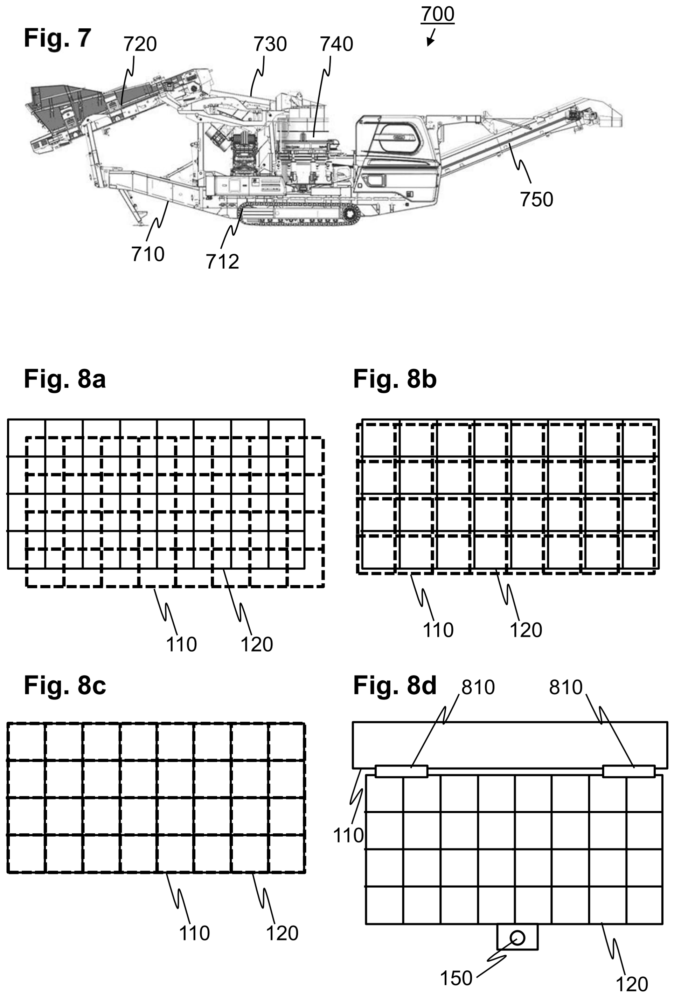

In an example embodiment, the blocking grid 120 has a second grid opening size, as can be appreciated from Fig. 2, for example. In an example embodiment, the first grid opening size is greater than the second grid opening size. Advantageously, by having a greater grid opening size in the fixed bottom grid 110 underneath the blocking grid 120, blocking risks of the blocking grid may be reduced. However, in another example embodiment (see Fig. 8d), the blocking grid 120 is pivotably attached with hinges 810 and so movable next or adjacent to the fixed bottom grid 110 or apart thereof. Figs. 8a to 8c also illustrate an embodiment in which the first and second grid opening sizes are the same or substantially the same, or in which a spacing of the grid openings is the same or substantially the same. As seen in Fig. 8a, the blocking grid 120 may constrict or split the first openings of the fixed bottom protection grid 110 to smaller sized passage for more effective finger protection in the protective state of the blocking grid 120. Fig. 8b illustrates an embodiment in which the blocking grid 120 only constricts the first openings without necessarily increasing the number of openings through which the mineral material needs to split for passing through the tail end finger protection. It is also possible to move the blocking grid 120 between states illustrated by Figs. 8a and 8b so that Fig. 8b represents the state in which the blocking grid no longer constricts the first openings as a narrowing effect on the openings is insubstantial. In an example embodiment, the narrowing effect on the openings is insubstantial so that the blocking grid 120 no longer constricts the first openings, when total surface area of the first openings is no longer reduced by more than 10 or 20 per cent. In an example embodiment, the maintenance state is defined as a state in which the blocking grid 120 constricts the fixed bottom grid by at most 50 or 75 % of the extent in which the blocking grid constricts the fixed bottom grid in the protective state. Fig. 8c illustrates the protective state in which the first and second grid opening sizes are the same and the second openings of the blocking grid 120 are aligned with the first openings of the fixed bottom protection grid.

In an example embodiment, the blocking grid 120 is configured to block accessing a tail end nip 510 (Fig. 5) of the belt conveyor from below by the blocking grid 120 when in the protective state.

In an example embodiment, the blocking grid 120 is configured to allow having a maintenance access to the fixed bottom protection grid 110 from below in the maintenance state of the blocking grid 120 for clearing of accrued mineral material.

In an example embodiment, the second grid opening size is small enough to block inserting a hand up to a wrist depth through the blocking grid. In an example embodiment, the first grid opening size is large enough for clearing mineral material at least with fingers through the first grid openings. In an example embodiment, the first grid opening size is suitable to block accessing by hands the tail end nip 510 of the belt conveyor from below. In an example embodiment, the first grid opening is at most 50 %; 100 %; or 200 % greater than the second grid opening. In an example embodiment, the second grid opening is at most 20 mm; 30 mm; 50 mm; or 65 mm. In an example embodiment, the first grid opening is at most 50 mm; or 75 mm.

In an example embodiment, in case of rectangular openings, the grid opening is defined along a longer side of the grid opening. In an alternative example embodiment, the grid openings are defined as a maximum diameter of a ball that can pass through without making a contact with any surface that defines the grid openings.

In an example embodiment, the blocking grid 120 is releasable for moving by detaching a locking element 150, such as a bolt. In an example embodiment, the locking element is releasable by a tool only. In an example embodiment, the blocking grid 120 is configured to remain coupled with the fixed bottom protection grid 110 even when the locking element 150 is released, see e.g. Figs. 2 and 6 in particular. Advantageously, losing the blocking grid 120 may be structurally hindered by maintaining the blocking grid coupled 120 with the fixed bottom protection grid 110. As seen in Figs. 5 and 6, the blocking grid 120 may be blocked by a stopper 520 that prevents moving the blocking grid 120 entirely out and away. In Figs. 5 and 6, the stopper also maintains the blocking grid 120 substantially parallel with the fixed bottom protection grid 110, when abutting with the stopper 520. In an example embodiment, the blocking grid 120 comprises a far end that is configured to define a far side wall 124. The far side wall 124 may be suited to partially define a grid basket for receiving accruing mineral material from the conveyor belt 160. The far side wall 124 may further be suited to double as a means for configuring the blocking grid 120 to remain coupled with the fixed bottom protection grid 110.

In an example embodiment, the blocking grid 120 is configured to be movable away from the fixed bottom protection grid 110 to a sufficient extent for clearing the fixed bottom protection grid 110. In an example embodiment, the blocking grid 120 is configured to be slidable away from the top of the fixed bottom protection 110 grid to an extent that is at least 65 %; 80 %; or 90 % of a length of the blocking grid 120, preferably in sliding direction.

In the example embodiment illustrated by Fig. 8d, the hinges 810 maintain the blocking grid coupled with the fixed bottom protection grid 110. Unlike a case in which the sole finger protection grid is hinged, here the fixed bottom protection grid 110 would bear all or at least most of the accrued mineral material. The fixed bottom protection grid 110 thus helps in avoiding issues with the blocking grid 120 coming down with an inconveniently high force. Moreover, since fixed bottom protection grid 110 bears the weight of the accrued mineral material, the blocking grid 120 may be made less heavy and also therefore more convenient to handle. Looking also back at Fig. 8a, it is appreciated that a support may be provided for the blocking grid 120 to movably support the blocking grid 120 in its two different states and between them. For instance, there may be a suitable sliding or lever mechanism, such as a four-bar coupling. While in Figs. 8a to 8c, the blocking grid 120 is of the same size with the fixed bottom protection grid 110, slightly larger blocking grid 120 would simplify movably supporting the blocking grid 120 between the protective state and the maintenance state without exposing the support to falling mineral material.

In an example embodiment, the tail end finger protection 100 is configured to prevent getting fingers closer than 10 cm; 20 cm; or 50 cm to the tail end nip 510 even if the blocking grid 120 were removed and only the fixed bottom protection grid 110 remained in place.

In an example embodiment, the fixed bottom protection grid 110 has a thickness of at least 3 mm; 4 mm; or 5 mm. Advantageously, such thicknesses may provide sufficient strength without excessive weight and material consumption.

In an example embodiment, the blocking grid 120 has a thickness of at least 2 mm; 3 mm; or 4 mm. Advantageously, such thicknesses may provide sufficient strength without excessive weight and material consumption, when also supported by the fixed bottom protection grid.

In an example embodiment, the blocking grid 120 defines second grid openings by first ridges that are at most 2 mm; 3 mm; or 4 mm wide. Advantageously, such first ridges may be narrow enough to allow most of the mineral material fall through the second grid openings instead of accruing onto the first ridges. In an example embodiment, the first ridges comprise first sloping upper surfaces so as to mitigate accrual of mineral material thereon.

In an example embodiment, the fixed bottom protection grid 110 defines the first grid openings by second ridges that are at most 2; 3; or 4 mm wide. Advantageously, such second ridges may be narrow enough to allow most of the mineral material fall through the first grid openings instead of accruing onto the second ridges.

In an example embodiment, the first ridges comprise sloping upper surfaces so as to mitigate accrual of mineral material.

In an example embodiment, the blocking grid 120 and the fixed bottom protection grid 110 are configured to match each other so when the blocking grid 120 is in place, the second ridges are covered by the first ridges. For example, spacing of the first grid openings may be a multiple of a spacing of the second grid openings. In an example embodiment illustrated by Fig. 1, for example, the first ridges do not span over the first grid openings for mitigating blocking of the tail end finger protection 100, when the blocking grid 120 is aligned with the fixed bottom protection grid 110.

In an example embodiment, the tail end finger protection 100 is configured to align the blocking grid 120 with the fixed bottom protection grid 110 when the blocking grid 120 is moved in place. In an example embodiment, the tail end finger protection 100 comprises one or more alignment guides (not shown, e.g., welded bars or bolt adjustable wedges). For example, alignment stoppers may be provided to adjustably position the blocking grid 120 when moved in place to the operating configuration.

In an example embodiment, the tail end finger protection 100 comprises an external side wall 130 configured to block accessing of the tail end nip from an external side of the belt conveyor. In an example embodiment, the external side wall 130 comprises a steel plate.

In an example embodiment, the tail end finger protection 100 comprises an inner side wall 140 configured to block accessing of the tail end nip 510 from between external edges of the belt conveyor. In an example embodiment, the inner side wall 140 comprises a rubber plate 140. In an example embodiment, the rubber plate 140 is adjustable to align the inner side wall 140 adjacent to the belt of the conveyor. Fig. 3 illustrates some details of an example embodiment with this respect. In an example embodiment, a first side wall part 330, e.g., a steel plate, joins with the fixed bottom protection grid 110 (or is integrally formed, for example). In an example embodiment, an attachment plate 340 sandwiches the rubber plate 140 between the first side wall part 330. In an example embodiment, bolts or nuts 350 tighten and lock in place the rubber plate 140 by squeezing the attachment plate 340 against the rubber plate 140. In an example embodiment, the rubber plate 140 has oblong apertures or grooves that allow positioning of the rubber plate 140 exactly adjacent to the conveyor belt 160 on assembling the tail end finger protection 100.

In an example embodiment, the belt is made of flexible material. In an example embodiment, the belt consists of a single piece of flexible material. In an example embodiment, the belt is made of rubber or polymer material. In an example embodiment, the belt is an apron belt, e.g., one that comprises one or more chains and a plurality of lamellas driven by the one or more chains. In an example embodiment, the apron belt comprises one chain on each side and lamellas extending between the chains.

Fig. 7 shows a mineral material processing plant 700 of an example embodiment. In an example embodiment, the mineral material processing device comprises one or more of the following elements:
a platform frame 710;
self-propelling element 712 such as one or more crawler tracks or wheels;
a belt conveyor that is a feeder 720 comprising a tail end;
a screen 730, such as a pre-screen or a multi-deck screen;
a crusher, such as an impact crusher, a gyratory crusher, cone crusher, or a jaw crusher;
a discharge conveyor 750.

In an example embodiment, the mineral material processing plant 700 comprises the tail end finger protection of any example embodiment.

In an example embodiment, there is provided a method for tail end finger protection of a belt conveyor of mineral material, including one or more of:
covering an edge of the belt conveyor from below at a tail end by a fixed bottom protection grid with a first grid opening size
supporting, by a support, a blocking grid on top of the fixed bottom protection grid movably between a protective state and a maintenance state in which the blocking grid has been moved adjacent to the fixed bottom protection grid out of the protective state
having by the blocking grid a second grid opening size, wherein the first grid opening size is greater than the second grid opening size
blocking accessing a tail end nip of the belt conveyor from below by the blocking grid when in the protective state
allowing having a maintenance access to the fixed bottom protection grid from below in the maintenance state of the blocking grid for clearing of accrued mineral material.

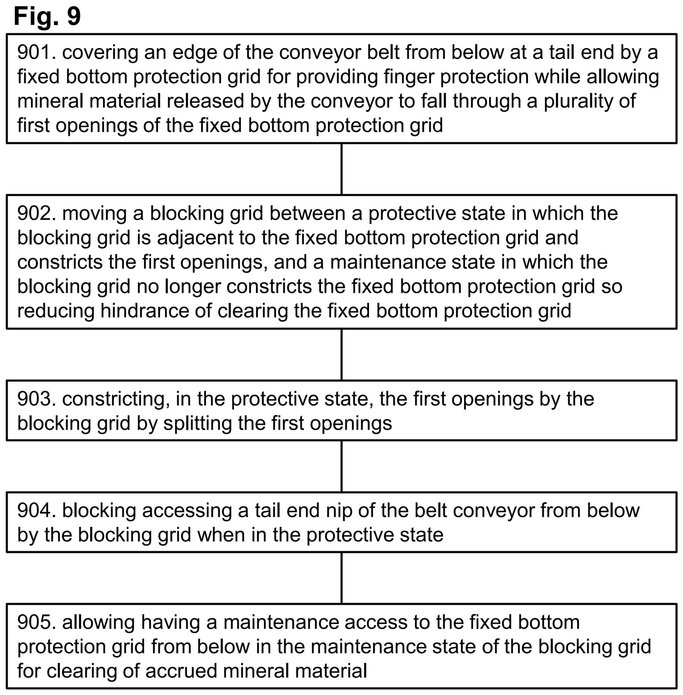

Fig. 9 shows a flow chart of a method of an example embodiment, comprising one or more of the following steps for tail end finger protection of a belt conveyor of mineral material:
901. covering an edge of the conveyor belt from below at a tail end by a fixed bottom protection grid for providing finger protection while allowing mineral material released by the conveyor to fall through a plurality of first openings of the fixed bottom protection grid;
902. moving a blocking grid between a protective state in which the blocking grid is adjacent to the fixed bottom protection grid and constricts the first openings, and a maintenance state in which the blocking grid no longer constricts the fixed bottom protection grid so reducing hindrance of clearing the fixed bottom protection grid;
903. constricting, in the protective state, the first openings by the blocking grid by splitting the first openings;
904. blocking accessing a tail end nip of the belt conveyor from below by the blocking grid when in the protective state;
905. allowing having a maintenance access to the fixed bottom protection grid from below in the maintenance state of the blocking grid for clearing of accrued mineral material.

Various embodiments have been presented. It should be appreciated that in this document, words comprise; include; and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A tail end finger protection (100) for a belt conveyor (720, 750) of mineral material, comprising:
a fixed bottom protection grid (110) configured to provide a finger protection at an edge of the belt conveyor (720, 750) from below at a tail end (310) while allowing mineral material released by the conveyor to fall through a plurality of first openings of the fixed bottom protection grid (110); and
a blocking grid (120) movable between a protective state in which the blocking grid is adjacent to the fixed bottom protection grid (110) and constricts the first openings, and a maintenance state in which the blocking grid (120) no longer constricts the first openings of the fixed bottom protection grid (110) so reducing hindrance of clearing the fixed bottom protection grid.

2. The tail end finger protection of claim 1, wherein the blocking grid (120) is configured to block accessing a tail end nip (510) of the belt conveyor (720, 750) from below by the blocking grid (120) when in the protective state.

3. The tail end finger protection (100) of claim 1 or 2, wherein the blocking grid (120) is configured to allow having a maintenance access to the fixed bottom protection grid (110) from below when in the maintenance state of the blocking grid (120) for clearing of accrued mineral material.

4. The tail end finger protection (100) of any one of preceding claims, wherein the blocking grid (120) is releasable for moving by detaching a locking element (150).

5. The tail end finger protection (100) of any one of preceding claims, wherein
the blocking grid (120) comprises first ridges;
the fixed bottom protection grid (110) comprises second ridges; and
the blocking grid (120) and the fixed bottom protection grid (110) are configured to match each other so when the blocking grid (120) is in the protective state, the second ridges are covered by the first ridges.

6. The tail end finger protection (100) of any one of claims 1 to 5, wherein the blocking grid (120) is configured to split grid openings of the fixed bottom protection grid (110) when the blocking grid (120) is in the protective state.

7. The tail end finger protection (100) of claim 6, wherein the blocking grid (120) is configured to transition from the protective state to the maintenance state by aligning the grid openings of the blocking grid (120) and the fixed bottom protection grid (110).

8. The tail end finger protection (100) of any one of preceding claims, wherein the finger protection (100) comprises an external side (130) wall configured to block accessing of the tail end nip (510) from an external side (130) of the belt conveyor (720, 750).

9. The tail end finger protection (100) of any one of preceding claims, wherein the finger protection (100) comprises an inner side wall (140) configured to block accessing of the tail end nip (510) from between external edges of the belt conveyor (720, 750).

10. The tail end finger protection (100) of claim 9, wherein the inner side wall (140) comprises a rubber plate (140) that is adjustable to align the inner side wall (140) adjacent to the belt of the conveyor (720, 750).

11. A mineral material processing device (730, 740) comprising:
the tail end finger protection (100) of any one of preceding claims; and
the belt conveyor (720, 750) comprising the tail end (310);

12. The mineral material processing device (730, 740) of claim 11, wherein the mineral material processing device (730, 740) comprises a screen (730) or a crusher (740).

13. A mineral material processing plant (700) comprising:
the mineral material processing device (730, 740) of claim 11 or 12; and
a platform frame (710) that is configured to carry the mineral material processing device (730, 740).

14. The mineral material processing plant (700) of claim 13, wherein the mineral material processing plant (700) is self-propelling.

15. A method for tail end finger protection (100) of a belt conveyor (720, 750) of mineral material, comprising:
covering (901) an edge of the conveyor (720, 750) belt from below at a tail end (310) by a fixed bottom protection grid (110) for providing finger protection while allowing mineral material released by the conveyor to fall through a plurality of first openings of the fixed bottom protection grid (110); and
moving (902) a blocking grid (120) between a protective state in which the blocking grid (120) is adjacent to the fixed bottom protection grid (120) and constricts the first openings, and a maintenance state in which the blocking grid (120) no longer constricts the fixed bottom protection grid (110) so reducing hindrance of clearing the fixed bottom protection grid.
